# EUROPEAN PATENT SPECIFICATION

(11) **EP 3 673 006 B1**
(45) Date of publication and mention of the grant of the patent: **18.08.2021**
(21) Application number: 18753444.1
(22) Date of filing: 22.08.2018
(51) Int. Cl.: C08J 5/04, C08J 5/06, C08J 5/10

(54) **COMPOSITION COMPRISING CARBON FIBERS AND AN ADDITIVE AGENT**
ZUSAMMENSETZUNG MIT KOHLENSTOFFASERN UND EINEM ZUSATZSTOFF
COMPOSITION COMPRENANT DES FIBRES DE CARBONE ET UN ADDITIF

(30) Priority: 24.08.2017 EP 17187768
(43) Date of publication of application: 01.07.2020
(73) Proprietor: BYK-Chemie GmbH, 46483 Wesel (DE)
(72) Inventor: NAGELSDIEK, René, 46483 Wesel (DE); KNAPPKE-BONGARTZ, Christiane, 46483 Wesel (DE); GUNNING, Lee Robyn, 46483 Wesel (DE); RUDNER, Jasmin, 46483 Wesel (DE)
(74) Representative: Altana IP Department
(86) International application number: PCT/EP2018/072690
(87) International publication number: WO 2019/038341

(56) References cited:
- EP-A1- 2 749 690
- WO-A1-84/02140
- US-A1- 2013 224 470
- US-A1- 2017 029 557

## Description

The invention relates to a composition comprising carbon fibers and an additive agent, to a process of manufacturing a carbon fiber composite material, to a carbon fiber composite material, and to the use of an additive agent for improving mechanical properties of a carbon fiber composite material.

Carbon fiber reinforced composite materials comprise carbon fibers embedded in a polymer matrix. The polymer matrix serves as binder between the fibers. The matrix polymer may be a thermoplastic polymer and/or a crosslinked polymer. The carbon fibers generally improve the mechanical properties of composite material, as compared to the matrix polymer alone. Improvements of tensile strength and stiffness have been achieved, while the composite materials have a low density. Such materials have attractive properties for use in vehicles for air and ground transportation, because their low weight allows a low fuel or energy consumption, e.g., of engine driven vehicles. Carbon fiber composite materials have also been employed in other areas, where a combination of high mechanical strength and light weight are desirable, for example for certain sports items, clothing, and rotor blades, for example for windmills.

Additives which serve as a coupling agent between the carbon fibers and the polymer matrix have been described. Such coupling agents can improve the bond strength between the carbon fibers and the polymer matrix and thus improve the overall mechanical properties of the carbon fiber composite material.

US 2013/224470 relates to a method of improving adhesion of carbon fibers with a polymeric matrix. According to one embodiment, an unsaturated monomer is included in the matrix. Examples of suitable monomers include amino-containing acrylates or methacrylates, such as 2-aminoethyl methacrylate, 2-(methylamino)ethylmethacrylate, and 2-(dimethylamino)-ethylmethacrylate. It has been found that the mechanical properties of composite materials are not always optimal when the above-mentioned monomers are used.

International patent application WO 84/02140 describes amino substituted acrylamide monomers as coupling agents for thermoset polyester resin carbon fiber composite materials. The amount of amino substituted acryl amide monomer is 5 to 30 weight-%, based on the weight of the polyester resin matrix.

Acrylamide and (meth) acrylic ester monomers are undesirable in view of their unfavorable toxicity profile and their unpleasant odor. These properties require specific industrial hygiene measures in composite manufacturing sites where such monomers are used. Furthermore, small amounts of uncured monomers may remain in the composite materials and migrate to the surface during the service life of the composite material during normal use. Residual uncured monomers are likewise problematic when the composite material is subjected to cutting, drilling or sanding operations during manufacture of products containing the composite materials.

There is a need for additives acting as coupling agents for carbon fibers for use in composite materials which alleviate the above mentioned drawbacks. Furthermore, the additives should effectively improve the mechanical properties of carbon fiber composite materials, even if applied in small amounts.

In view of the above, the invention provides a composition comprising carbon fibers and an additive agent having at least one functional group (A) which is an ethylenically unsaturated polymerizable group, and at least one functional group (B) comprising at least one group selected from secondary amine, tertiary amine, salt of secondary or tertiary amine, and quaternary ammonium, and wherein groups (A) and groups (B) are connected via covalent bonds, and wherein the covalent bonds include at least one ester group.

In another embodiment, the groups (A) and groups (B) of the additive agent are connected via covalent bonds which include two or more ester groups.

It should be noted that US 2017/0029557 A describes carbon fiber sizing agents which are epoxy-amine adducts. In some embodiments, the epoxy-amine adducts are modified by reaction with urethane acrylates. The modified epoxy-amine adducts do not appear to contain any ethylenically unsaturated groups.

The composition of the invention does not rely on acrylamide monomers and has an improved industrial hygiene profile with respect to toxicity and odors compared to the compositions known from WO 84/02140. Furthermore, the additive and the composition are universally applicable in manufacturing of carbon fiber composite materials. The additive is effective in improving the mechanical properties of carbon fiber composite materials at low additive levels.

In a preferred embodiment, the additive agent is free or essentially free of acrylic amide or methacrylic amide groups.

As mentioned above, the additive agent of the composition has at least one functional group (A) which is an ethylenically unsaturated polymerizable group. Ethylenically unsaturated polymerizable groups can undergo a polymerization reaction. The polymerization reaction can be a cationic or anionic polymerization reaction. Most often, the polymerization reaction is a radical polymerization which is initiated by an agent which generates free radicals. Examples of free radical initiators include organic peroxides, azo compounds, or compounds like benzopinacol (1,1,2,2-tetraphenyl-1,2-ethandiol). In some embodiments, polymerization is initiated in the absence of a photoinitiator, for example by heating or by radiation capable of causing chemical reactions, such as UV radiation, electron beam, microwave radiation, or gamma radiation.

Examples of suitable ethylenically unsaturated polymerizable groups include acrylic acid ester, methacrylic acid ester, maleic acid ester, fumaric acid ester, itaconic acid ester, vinyl ester, vinyl ether, vinyl aromatic group, allyl ester, allyl ether, and combinations thereof. The additive agent comprises at least one functional group (A) per molecule which is an ethylenically unsaturated polymerizable group. In some embodiments, the additive agent comprises one functional group (A) per molecule. In other embodiments, the additive agent comprises 2, 3 or 4 functional groups (A) per molecule. In further embodiments, the additive agents comprises more than 4 functional groups (A) per molecule, preferably up to 25 or up to 15 of such groups.

It is preferred that the additive agent does not comprise more than 6 functional groups (A) per molecule. The additive agent may also comprise a mixture of different individual molecules having different numbers of functional groups (A). In that case, the specific nature of the ethylenically unsaturated functional groups may be the same or different.

The additive agent further includes at least one functional group (B) comprising at least one group selected from secondary amine, tertiary amine, salt of secondary or tertiary amine, and quaternary ammonium. In some embodiments, the additive agent comprises one functional group (B) per molecule. In other embodiments, the additive agent comprises 2, 3 or 4 functional groups (B) per molecule. In further embodiments, the additive agents comprises more than 4 functional groups (B) per molecule, preferably up to 25, 20, or 12 of such groups.

It is preferred that the additive agent does not comprise more than 6 functional groups (B) per molecule. The additive agent may also comprise a mixture of different individual molecules having different numbers of functional groups (B). In that case, the specific nature of groups (B) may be the same or different. In the additive agent, the functional groups (A) and functional groups (B) are connected via covalent bonds, which means that they are part of the same molecule. The covalent bonds include at least one ester group. In some preferred embodiments, the covalent bonds connecting the functional groups (A) and (B) include two or more than two ester groups. Ester groups are esters of carboxylic acids.

In a preferred embodiment, the connectivity in the additive agent is represented by the following formula (I)

A-R¹-O-(C=O)-CR²R³-CR⁴R⁵-NR⁶R⁷ (I)

wherein
A represents an ethylenically unsaturated polymerizable group,
R¹ represents an organic linking group,
R², R³, R⁴, and R⁵ independent of each other represent hydrogen or an alkyl group having 1 to 6 carbon atoms, with the proviso that at least one of R², R³, R⁴, and R⁵ is hydrogen,
R⁶ and R⁷ independently of each other represent hydrogen or an organic group. It is preferred that at least one of R⁶ and R⁷ is an organic group, generally an organic group having 1 to 32 carbon atoms, preferably 2 to 16 carbon atoms.

In some embodiments, R⁶ and R⁷ are covalently linked to each other to form a cyclic structure together with the nitrogen to which they are linked.

In a preferred embodiment, A represents an acrylic or methacrylic ester group.

It is preferred that at least two, more preferred at least 3, and most preferred that all of R², R³, R⁴, and R⁵ represent hydrogen.

It is furthermore preferred that the organic linking group R¹ comprises or consists of an alkylene group having 2 to 12 carbon atoms. Equally preferred are embodiments wherein R¹ comprises or consists of a polyalkylene oxide segment containing 2 to 20, preferably 2 to 10 polymerized alkylene oxide repeating units. The alkylene oxide is preferably ethylene oxide or propylene oxide. Furthermore preferred are embodiments wherein R¹ comprises or consists of a polyester segment containing 2 to 25, preferably 2 to 15 repeating units; the polyester segment is preferably based on ε-caprolactone and/or δ-valerolactone or based on dicarboxylic acids having two to 8 carbon atoms and/or a benzenedicarboxylic acid in combination with a diol, preferably an aliphatic C2-C8 diol.

In another embodiment, it also possible that R¹ comprises or consists of both alkylene oxide and ester repeating units.

In some embodiments, the additive agent can be represented by the following formulae (II) or (III):

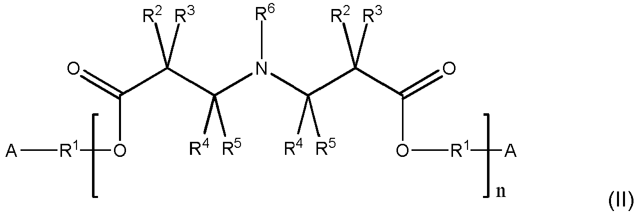

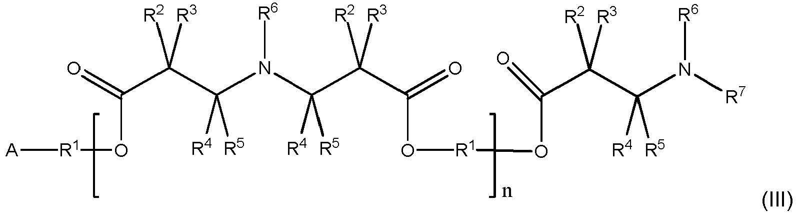

In the formulae (II) and (III) the groups A and R¹ to R⁷ are defined as above for formula (I), and n represents an integer from 1 to 15, preferably from 1 to 10. If specific groups occur more than once in a given molecule, they can be selected independently of each other for every occurrence.

The inventive additive agent comprises at least one functional group (B) comprising at least one group selected from secondary amine, tertiary amine, salt of secondary or tertiary amine, and quaternary ammonium. In a preferred embodiment, the at least one functional group (B) comprises at least one group selected from secondary amine and tertiary amine.

In some embodiments, the additive agent has at least two functional groups (B1) and (B2), wherein (B1) comprises at least one secondary or tertiary amine group and (B2) comprises at least one group selected from primary amine, secondary amine, tertiary amine, and hydroxyl. In a preferred embodiment, the additive agent has at least two functional groups (B1) and (B2), wherein (B1) comprises at least one secondary or tertiary amine group and (B2) comprises at least one group selected from tertiary amine and hydroxyl.

In embodiments wherein the additive agent has at least two functional groups (B1) and (B2) in which (B1) comprises at least one secondary or tertiary amine group and (B2) comprises at least one group selected from amine and hydroxyl groups, it is preferred that the two amino group nitrogen atoms of (B1) and (B2) or the nitrogen atom of the amine group in (B1) and the hydroxyl group in (B2) are covalently linked to each other via an organic group having 2 or 3 carbon atoms. It is highly preferred that the groups named are covalently linked to each other via an ethylene or a propylene group.

In a very preferred embodiment, the inventive additive agent can be represented by the formulae (II) or (III) in which A represents an acrylic or methacrylic ester group, preferably an acrylic ester group, and R⁶ represents a hydrocarbyl group which is substituted by 1, 2, or 3 hydroxyl groups.

In another very preferred embodiment, the inventive additive agent can be represented by the formulae (II) or (III) in which A represents an acrylic or methacrylic ester group, preferably an acrylic ester group, and R⁶ represents a hydrocarbyl group which is substituted by 1 or 2 tertiary amine groups.

In a further very preferred embodiment, the inventive additive agent can be represented by the formula (IV) in which A represents an acrylic or methacrylic ester group, preferably an acrylic ester group, R¹ to R⁷ are defined as described above, including the same preferred embodiments. p and q are independently selected from integers of 1 to 10, preferably 1 to 6, more preferably 1 to 4; a very preferred embodiment is that p=1 and q=1. In particularly preferred embodiments, R⁶ and R⁷ independently represent hydrocarbyl groups substituted by one or more than one hydroxyl group or tertiary amine group.

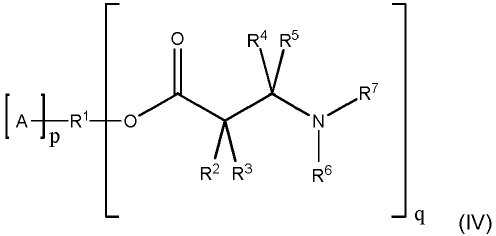

The additive agent preferably has a molecular weight of at least 200 g/mol, more preferably at least 300 g/mol, such as 400 or 700 g/mol. Generally, the molecular weight of the additive agent does not exceed 10000 g/mol, preferably 7500, 5000, or 4000 g/mol. If the additive agent has a molecular weight distribution, the mentioned molecular weights refer to the number average molecular weight Mn, determined by gel permeation chromatography using THF as eluent and calibration with a polystyrene standard. It is preferred that the additive agent has a molecular weight distribution, i.e. Mw/Mn is larger than 1.00.

In a further preferred embodiment, the additive agent comprises a polyalkylene oxide segment which is located between at least one functional group (A) and at least one functional group (B). The polyalkylene oxide segment is generally a polymer or copolymer of alkylene oxides selected from ethylene oxide, propylene oxide, butylene oxide, tetramethylene oxide and combinations thereof. It is preferred that the polyalkylene oxide is selected from ethylene oxide, propylene oxide, and combinations thereof. It is very much preferred that the polyalkylene oxide is polyethylene oxide. If mixtures of two or more polymerized alkylene oxides are present in the segment, they may be present in the form of blocks or statistical sequences. The polyalkylene oxide segment generally comprises between 2 and 150, preferably 3 and 75, more preferably 4 and 50 units of polymerized alkylene oxide.

The additive agents described above can be prepared by an addition reaction of a primary or secondary amine group-containing compound to a compound having at least one ethylenically unsaturated polymerizable group (A) and at least one Michael-acceptor group. A Michael acceptor group is an electron depleted ethylenically unsaturated group which is susceptible to addition of a nucleophilic agent. Examples of suitable Michael-acceptor groups are the double bonds of α,β-unsaturated carboxylic acid esters.

In some embodiments, the ethylenically unsaturated polymerizable group (A) may also be a Michael acceptor group. Thus, the additive agents may, in some embodiments, be prepared by reaction of a compound having at least two acrylate-functional groups with a compound having a primary or secondary amine group, wherein the primary or secondary amine is employed in such a molar amount to assure that a sufficient number of acrylate groups is retained. Generally, when 1.0 mol of acrylate groups is reacted with a primary amine, between about 0.02 and 0.45 mol of primary amino groups are employed, preferably between 0.05 and 0.40 mol, more preferably between 0.10 and 0.35 mol. When 1.0 mol of acrylate groups is reacted with a secondary amine, between about 0.05 and 0.80, preferably between 0.10 and 0.75, more preferably between 0.20 and 0.70, even more preferably between 0.30 and 0.60 mol of secondary amino groups are employed.

Instead of a compound having at least two acrylate-functional groups, it is also possible to use a compound having at least two groups selected from maleate, fumarate, and itaconate functional groups, for example an unsaturated polyester based on maleic anhydride (or maleic acid), fumaric acid, itaconic acid, and mixtures thereof.

In a further embodiment, the ethylenically unsaturated polymerizable group (A) is not a Michael-acceptor group. Examples of such groups are allyl ethers, allyl esters, vinyl esters, vinyl aromatic groups, and vinyl ethers. In such cases, the additive agent may be prepared by an addition reaction of a primary or secondary amine to a compound having (i) at least one ethylenically unsaturated polymerizable group (A) which is not a Michael-acceptor group and (ii) at least one Michael-acceptor group.

Examples of suitable starting materials to prepare the additive agents are diacrylates of diols. Suitable diols are simple aliphatic diols, such as 1,6-hexane diol or neopentyl glycol, as well as diols derived from oligo- or poly alkylene oxides. Acrylic acid esters of alcohols having more than two hydroxyl groups are suitable as well, for example trimethylol propane, glycerol, pentaerythritol, ditrimethylol propane, or dipentaerythritol, as well as alkoxylated derivatives thereof.

Further examples include polyester di- or tri- or polyfunctional acrylates based on a polyester backbone terminated by acrylic acid ester groups. Alternatively, it is possible to use so-called epoxy acrylates, which can be prepared by addition of acrylic acid to epoxide functional precursors. Examples of suitable epoxide functional precursors are epoxidized natural oils, aromatic or aliphatic glycidylethers, and epoxide functional polymers, for example copolymers of glycidyl methacrylate.

It also possible to use urethane acrylates, which can be prepared by reaction of hydroxyl-functional acrylate esters with aliphatic or aromatic isocyanates having two or more isocyanate groups.

The primary or secondary amine which may be added to a Michael-acceptor group in the above-described reactions is generally a primary or secondary amine having a molecular weight in the range of 31 to about 1200 g/mol, more preferably of 45 to about 500 g/mol, even more preferably of 59 to about 300 g/mol. Aliphatic amines and arylaliphatic amines are preferred.

In some embodiments, the primary or secondary amine has further functional groups. Examples of suitable further functional groups are hydroxyl groups, tertiary amine groups, and thiol groups. So far, very good results have been obtained in embodiments wherein the further functional group is a tertiary amine group or a hydroxyl group. Examples of suitable amine starting materials include primary and secondary aliphatic or arylaliphatic monoamines and diamines. Very good results have been obtained with aliphatic primary and secondary amines having an additional tertiary amine group or an additional hydroxyl group.

Therefore, preferred amine starting materials are aminoethanol, 1-aminopropan-2-ol, 1-aminopropan-3-ol, aminobutanol, aminopentanol, aminohexanol, 2-amino-2-(hydroxymethyl)propan-1,3-diol, dihydroxydiethylamin, 2-ethyl-2-aminopropanediol, Methyl-D-glucamine, N-Methyl-D-glucamine, 1-(3-aminopropyl)imidazole, N,N-dimethyl-1,3-diaminopropane, N,N,N",N"-tetramethyldipropylenetriamine, N,N-diethylethylenediamine, and 1-methylpiperazine.

In some embodiments the additive agent is prepared by an addition reaction of a primary or secondary amine having a further functional group which is a primary or secondary amine group. If a molecule having one or more primary amine groups is used in such reactions, it is sometimes preferred to use a molar excess of primary amine groups over Michael acceptor groups. This is particularly preferred if the Michael acceptor molecule has two different kinds of ethylenically unsaturated groups which are unsaturated groups being Michael acceptor groups and other unsaturated groups not being Michael acceptor groups.

Preferred amine starting materials being di-primary amines are ethylene diamine, 1,2-diamino propane, 1,3-diaminopropane, 1,4-diaminobutane, 1,5-diaminopentane, 1,6-diaminohexane.

Preferred amine starting materials being amines with more than two primary amine groups are polyethyleneimines (polyaziridines), and 2,2',2"-triaminotriethylamine.

Preferred amine starting materials having two or more amino groups of which at least one is a secondary amino group are triazacyclononane, piperazine, 2-methylpiperazine, N,N'-diethylethylendiamine, N,N,N'-trimethylaminoethyl-piperazine, and 3-(methylamino)propylamine, bis-(2-aminoethyl) amine, triethylene tetramine, and tetraethylene pentamine.

In some embodiments, the functional group (B) is an amine salt or a quaternary ammonium group. As known to someone skilled in the art, amine salts can be obtained by partial or complete neutralization of an amine using a Brönstedt acid; this acid can be both an organic or an inorganic acid. Quaternary ammonium groups can be obtained by treating a tertiary amine with an alkylating agent.

The addition reaction of primary amine groups to Michael-acceptor groups, such as acrylate groups, leads to secondary amine groups. Such secondary amine groups can undergo a further addition to a Michael-acceptor group of the same or of a different molecule. If this happens, the molecular weight of the reaction products increases, and generally the molecular weight distribution will be broadened.

The additive agent is generally present in the composition of the invention in an amount of 0.1 to 15.0 % by weight, calculated on the weight of the carbon fibers. In some embodiments, the additive agent is present in an amount of at least 0.2 % by weight, preferably 0.5 % by weight, such as 1.0 % by weight, always calculated on the weight of the carbon fibers. In some embodiments, the additive agent is present in the composition in an amount of at most 10.0 % by weight, preferably 8.0 or 6.0 % by weight, such as 5 or 3 % by weight, always calculated on the weight of the carbon fibers.

All known kinds of carbon fibers can be used in the composition according to the invention. Carbon fibers include amorphous carbon fibers and graphite fibers. Carbon fibers produced from various starting materials are equally suitable, for example carbon fibers prepared from polyacrylonitrile, pitch, or rayon. The carbon fibers may have undergone a chemical or mechanical surface pretreatment, for example with known sizing agents during fiber manufacture. Carbon fibers which have not been subjected to specific pretreatments may likewise be employed. It is preferred that the carbon fibers have already been subjected to a sizing treatment.

Depending on the intended end use, the carbon fibers may be present as filament fibers, as staple fibers, or as chopped fibers. In some embodiments, the carbon fibers are present as a woven or non-woven fabric. On other embodiments, the carbon fibers are present as a roving.

The compositions according to the invention are very suitable for preparing carbon fiber composite materials. Therefore, the compositions may comprise further components and materials which a generally used for the manufacturing of carbon fiber composite materials.

Therefore, it is preferred that the composition further comprises a curable resin or prepolymer component having at least one ethylenically unsaturated polymerizable group. The curable resin or prepolymer component generally forms the matrix polymer of the carbon fiber composite material. Such curable resins are well-known in the art. Examples include unsaturated polyester resins, for example a polyester resin having unsaturated groups based on maleic or fumaric acid. In other embodiments, the curable resin may be a polyurethane resin having ethylenically unsaturated polymerizable groups, for example polyurethane resins having one or more acrylate or methacrylate end groups. Other examples of suitable resins include vinyl ester resins, dicyclopentadiene based resins, and so-called (meth)acrylic syrup systems.

Further components may be present in the composition, in particular such components which are typically used in manufacturing carbon fiber composite materials. Examples of such components include thermoplastic resins or polymers, organic or inorganic fillers and pigments, thickeners, UV stabilizers, mold release agents, anti-foaming agents, and monomers or cross-linkers having ethylenically unsaturated polymerizable groups, such as acrylates and methacrylates or vinyl aromatic compounds. Curing initiators, such as organic peroxides, azo initiators, or benzopinacol may likewise be included in the composition.

The invention further relates to a process of manufacturing a carbon fiber composite material. The process comprises the steps of
i) providing a composition comprising
   a) carbon fibers,
   b) an additive agent having at least one functional group (A) which is an ethylenically unsaturated polymerizable group, and at least one functional group (B) comprising at least one group selected from secondary amine, tertiary amine, salt of secondary or tertiary amine, and quaternary ammonium, and wherein groups (A) and groups (B) are connected via covalent bonds, and wherein the covalent bonds include at least one ester group, and
   c) a curable resin or prepolymer component having ethylenically unsaturated polymerizable groups,
ii) curing the composition by radical polymerization to produce a carbon fiber composite material.

The curing process can be conducted by any method known in the art. Curing can be performed at room temperature or - preferably - at elevated temperatures. It is possible to start at ambient temperature and then use the exothermal behavior of the system to achieve the temperature increase. It is also possible to force temperature increase by external heating, optionally in combination with pressure. Typical procedures comprise sheet molding compounding (SMC), bulk molding compounding (BMC), infusion molding (RIM - resin infusion molding, RTM - resin transfer molding), compression molding, VARI (vacuum applied resin infusion), filament winding, pultrusion, and autoclave curing.

Generally, the same explanations provided above for the composition of the invention apply for the composition used in the process of the invention.

A typical inventive composition comprises
(i) 10.00 - 89.99 wt.% of a curable resin or prepolymer component having at least one ethylenically unsaturated polymerizable group,
(ii) 9.99 - 90.00 wt.% of a carbon fiber,
(iii) 0.01 - 13.50 wt.% of an additive agent having at least one functional group (A) which is an ethylenically unsaturated polymerizable group, and at least one functional group (B) comprising at least one group selected from secondary amine, tertiary amine, salt of secondary or tertiary amine, and quaternary ammonium, and wherein groups (A) and groups (B) are connected via covalent bonds, and wherein the covalent bonds include at least one ester group,
wherein the wt.% are calculated on the sum of (i), (ii) and (iii).

In some embodiments, the composition comprises at least 14.99, preferably 19.99, 24.99 or even 29.99 wt.% of component (i). In some embodiments, the composition comprises at most 80.00, preferably 75.00, 70.00, or even 60.00 wt.% of component (i).

In some embodiments, the composition comprises at least 19.99, preferably 24.99, 29.99 or even 39.99 wt.% of component (ii). In some embodiments, the composition comprises at most 85.00, preferably 80.00, 75.00, or even 70.00 wt.% of component (ii).

In some embodiments, the composition comprises at least 0.10, preferably 0.20, 0.50 or even 1.00 wt.% of component (iii). In some embodiments, the composition comprises at most 10.00, preferably 8.00, 6.00, or even 5.00 wt.% of component (iii).

All wt.% mentioned above are calculated on to the sum of components (i), (ii), and (iii).

When preparing the composition for use in the process, the individual components can be added and mixed in any suitable sequence.

In some embodiments, the additive agent is added to the carbon fibers prior to including the curable resin or prepolymer component to the composition. The additive agent may be added to the carbon fibers directly after manufacture of the fibers, before or after any chopping, cutting or weaving of the fibers. The additive agent may be applied to the carbon fibers in any suitable way, for example by spraying the neat or diluted additive agent on the fiber surface, or by dipping the fibers into the additive agent, which may optionally be diluted with a solvent. It is also possible to apply the additive agent to a woven or non-woven fabric or roving of carbon fibers. In a preferred embodiment, the inventive additive is applied as part of the sizing formulation used to pretreat the carbon fiber. In another preferred embodiment, the inventive additive is applied to the carbon fiber after the first sizing process is completed.

Alternatively, the additive agent may be pre-mixed with the curable resin or prepolymer component and included in the composition together with the curable resin or prepolymer component. In a still further embodiment, the additive agent is added to the composition after the carbon fibers have been combined with the curable resin or prepolymer component.

It has been found that the additive agent is effective in particular low amounts when it is added to the carbon fibers prior to including the curable resin or prepolymer component to the composition.

If so desired, the composition may be shaped in any suitable form prior to curing. Examples of shaping operation include placing the composition into a suitable mold, as well as forming of sheets by rolling or pressing processes, optionally followed by cutting steps.

Curing of the composition occurs by radical polymerization; the term radical polymerization may also include processes in which chain transfer reactions are taking place. In a preferred embodiment, to facilitate the curing reaction, a radical generating curing agent may suitably be included in the composition. Organic peroxides, azo initiators and benzopinacol are well-known and suitable radical generating agents. In addition to radical generating agents or alternatively to them, irradiation may also be used to achieve the curing process.

Curing is preferably carried out at elevated temperature, for example by heating the composition for a sufficient time and temperature to achieve the required degree of curing. Generally, curing can be carried out in the temperature range of 20 to 240 °C, preferably in the range of 40 to 220 °C, more preferred in the temperature range of 60 to 210 °C, even more preferred in the temperature range of 80 to 200 °C. Depending on the process used, the curing can be obtained in a rather short period like 20 seconds to 3600 seconds, but may also take up to 4, 6, 12, or even 24 hours. Curing at elevated temperature can be carried out in an autoclave or a suitable oven.

### Examples

### Preparation of additive agents

### Raw materials

| Name | Description |
|---|---|
| PEG200DA | diacrylate of polyethylene glycol of average molecular weight 200 |
| PEG400DA | diacrylate of polyethylene glycol of average molecular weight 400 |
| Sartomer SR 9003 | Propoxylated neopentyl glycol diacrylate |
| HDDA | 1,6-hexanediol diacrylate |
| Tone M100 | Reaction product of 1-hydroxyethylacrylate and 1.8 mol of epsilon-caprolactone |
| HDI | 1,6-hexamethylene diisocyanate |
| Sartomer CN 9165A | tetrafunctional aromatic urethane acrylate ex Arkema |

Molecular weights (Mₙ and M_{w}) were determined by means of gel permeation chromatography (GPC) according to DIN 55672 part 1 (2016-03). Tetrahydrofuran (THF + 1 vol.% dibutyl amine) was used as the eluent. The calibration was achieved using narrowly distributed polystyrene standards of molecular weights between 162 and 1,000,000 g/mol. The temperature of the column system was 25 °C.

### Additive agent AA1

In a flask equipped with stirrer, thermometer, dropping funnel and reflux condenser were placed 226.5 g (0.75 mol) of the diacrylate of polyethylene glycol of average molecular weight 200, and 298.7 g of propylene glycol methyl ether acetate. 1.04 g of 2,6-Di-tert-butyl-4-methylphenol were dissolved in the mixture. During a period of 15 minutes 48.2 g (0.45 mol) of benzyl amine was added dropwise. The mixture was stirred for 4 hours at a temperature of 30°C. A clear, colorless, low viscous product was obtained (Mₙ = 1144 g/mol, M_{w}= 2122 g/mol).

Further additive agents were prepared in an analogous manner as described for additive agent AA1 from the raw materials indicated in the Table below. All products were obtained as 48 wt.% solutions in propylene glycol methyl ether acetate (AA14 was prepared as 48 wt.% solution in methoxypropanol as the solvent).

| *Name* | *Raw material 1 (mol)* | *Raw material 2 (mol)* | *Mₙ (g*/*mol)* | *M_{w} (g*/*mol)* |
|---|---|---|---|---|
| AA1 | PEG200DA (0.750) | Benzylamine (0.450) | 1144 | 2122 |
| AA2 | PEG200DA (0.375) | N'-[3-(Dimethylamino)propyl]-N,N-dimethylpropane-1,3-diamine (0.225) | n.d. | n.d. |
| AA3 | PEG200DA (0.750) | 1,3-Bis(aminomethyl)-benzene (0.230) | n.d. | n.d. |
| AA4 | PEG400DA (0.500) | 3-Aminopropyldimethylamine (0.300) | 2976 | 8218 |
| AA5 | Dipropyleneglycol diacrylate (0.830) | 3-Aminopropyldimethylamine (0.495) | 1040 | 1912 |
| AA6 | Sartomer SR 9003 (0.610) | 3-Aminopropyldimethylamine (0.360) | 1535 | 2889 |
| AA7 | HDDA (0.880) | 3-Aminopropyldimethylamine (0.530) | 1003 | 1974 |
| AA8 | Reaction product of 2 mol Tone M100 and 1 mol HDI (0.269) | 3-Aminopropyldimethylamine (0.160) | 3616 | 7347 |
| AA9 | Sartomer CN 9165 A (0.088) | N'-[3-(Dimethylamino)propyl]-N,N-dimethylpropane-1,3-diamine (0.260) | 1148 | 2146 |
| AA10 | PEG200DA (0.750) | N,N-diethylethylenediamine (0.450) | 1314 | 2576 |
| AA11 | PEG200DA (0.750) | Diethanolamine (0.750) | 582 | 1088 |
| AA12 | PEG200DA (0.750) | 3-Aminopropyldimethylamine (0.450) | 1335 | 2725 |
| AA13 | Sartomer SR 9003 (0.610) | Diethanolamine (0.610) | 630 | 721 |
| AA14 | PEG200DA (0.750) | Tris(hydroxymethyl)aminomethane (0.290) | n.d. | n.d. |
| AA15 | PEG200DA (0.750) | Ethanolamine (0.600) | 1616 | 3913 |
| AA16 | PEG200DA (0.750) | Ethanolamine (0.45) | 1240 | 2834 |
| AA17 | PEG200DA (0.750) | Diethanolamine (0.660) | n.d. | n.d. |
| AA18 | PEG200DA (0.750) | Diethanolamine (0.880) | 756 | 2211 |
| AA19 | PEG200DA (0.750) | n-Butylamine (0.450) | 1251 | 2832 |

| | | | | |
|---|---|---|---|---|
| *(n.d. = not determined)* | | | | |

### Preparation of compositions comprising carbon fibers and an additive agent

### Raw materials

| Name | Description |
|---|---|
| N-C-416 g/m²1270 mm | Unidirectional carbon fiber sheets ex Saertex |

N-C-416 g/m² 1270 mm unidirectional carbon fiber sheets were cut into square shaped sheets having an edge length of 600 mm. The various additives solutions described above were spray applied to both sides of the square shaped sheets with a spray gun SAT Jet 30 HVLP Digital, using a 1.3 mm spray nozzle. The amount of additive (non-volatile content) applied was 3.12 g per sheet (8.64 g per m²), corresponding to 2.2 weight % of additive, calculated on the weight of the carbon fibers.

The carbon fiber compositions were stored for 24 hours at 23° C, before impregnating with a curable resin.

### Preparation of resin impregnated carbon fiber stacks

### Raw materials

| Name | Description |
|---|---|
| Palapreg® 2681-01 | Polyester resin in styrene ex Aliancys |
| Palapreg® P 17-02 | Unsaturated polyester resin in styrene ex Aliancys |
| Atlac XP 810X | Vinylester resin in styrene ex Aliancys |
| Trigonox 117 | Tert-butylperoxy-2ethylhexyl carbonate ex AkzoNobel |
| Coathylene HA 1681 | Polyethylene based polymer powder ex Axalta |
| Luvatol MK 35 NV | Thickener ex Lehmann & Voss |
| Luvatol EK 100KM | Thickener ex Lehmann & Voss |
| BYK P 9065 | Release agent ex BYK-Chemie |
| BYK P 9085 | Release agent ex BYK-Chemie |

A first composite resin material CRM1 was prepared by mixing the following materials with a dissolver at a maximum temperature of 35°C:

| Name | Amount (parts by weight) |
|---|---|
| Atlac XP 810 X | 92.50 |
| Palapreg 2681-01 | 7.50 |
| BYK-P 9085 | 5.00 |
| Trigonox 117 | 1.50 |
| Coathylene HA 1681 | 2.50 |
| Luvatol EK 100KM | 8.00 |

Resin impregnated carbon fiber stacks were prepared from the additive agent treated unidirectional carbon fiber sheets and the composite resin material CRM1 described above. Resin impregnation was carried out using a SMC machine (Schmidt & Heinzmann, model HM-LB-23). For every type of additve agent 4 individual sheets were combined in a stack before impregnation. The stacks were cut to dimensions of 390 mm x 290 mm and were stored for 24 h at 35 °C before curing.

### Preparation of carbon fiber composite sheets

The stacks described above were pressed and cured at a pressure of 133 bar at 150°C for 120 s using a press model PYXZ ex Zeulenroda.

### Measurement of mechanical properties

For measurement of transverse tensile strength according to DIN EN ISO 527-5, the carbon fiber composite sheets were cut into specimen of 250 mm x 25 mm edge length. For measurement of flexural strength according to DIN EN ISO 14130, the carbon fiber composite sheets were cut into specimen of 80 mm x 15 mm edge length. The flexural strength measurement was carried out parallel to the fiber direction. Prior to measurement of mechanical properties, the specimen were stored at 23°C and a relative humidity of 50% for a period of 24 h.

The results are summarized in the Table below:

| *Additive Agent* | *Transverse tensile strength in MPa* | *Flexural strength in MPa* | *Fiber content in weight-%* |
|---|---|---|---|
| None | 18.0 | 33.8 | 55.0 |
| AA1 | 28.1 | 47.6 | 55.0 |
| AA2 | 27.6 | 45.4 | 55.0 |
| AA3 | 26.6 | 45.2 | 55.0 |
| AA4 | 26.7 | 46.4 | 55.0 |
| AA5 | 29.7 | 49.5 | 55.0 |
| AA12 | 32.7 | 55.4 | 53.2 |
| AA6 | 33.1 | 49.5 | 55.0 |
| AA7 | 32.4 | 52.3 | 55.0 |
| AA8 | 29.6 | 48.1 | 55.0 |
| AA9 | 28.5 | 45.7 | 53.5 |
| AA10 | 31.3 | 61.5 | 55.0 |
| AA11 | 31.8 | 57.0 | 55.0 |
| AA13 | 26.8 | 43.2 | 53.5 |
| AA15 | 28.8 | 46.5 | 53.5 |
| AA16 | 29.4 | 50.6 | 53.5 |
| AA19 | 26.3 | 42.4 | 53.5 |
| AA17 | 28.6 | 44.8 | 53.5 |
| AA16 | 27.3 | 44.7 | 53.5 |
| AA14 | 28.5 | 53.5 | 55.0 |

The data in the table above clearly demonstrate that with carbon fiber compositions according to the invention significant improvements of mechanical properties of resulting carbon fiber composite materials can be obtained, in particular with respect to transverse tensile strength and flexural strength, compared to a composite material without using an additive agent.

A further composite resin material CRM2 was prepared by mixing the following materials with a dissolver at a maximum temperature of 35°C:

| Name | Amount (parts by weight) |
|---|---|
| Palapreg® P 17-02 | 92.00 |
| Palapreg® 2681-01 | 10.50 |
| BYK-P 9065 | 2.50 |
| Trigonox 117 | 1.50 |
| Coathylene HA 1681 | 2.50 |
| Luvatol EK 35 NV | 8.00 |

Resin impregnated carbon fiber stacks were prepared from the additive agent treated unidirectional carbon fiber sheets and the composite resin material CRM2 as described above. Curing and mechanical testing was carried out as described above. The results are summarized in the Table below:

| *Additive Agent* | *Transverse tensile strength in MPa* | *Flexural strength in MPa* | *Fiber content in weight-%* |
|---|---|---|---|
| None | 8.1 | 17.9 | 52 |
| AA12 | 25.7 | 46.1 | 52 |
| 2-(Dimethyl-amino)ethyl methacrylate | 20.9 | 38.9 | 52 |

From the data it can be inferred that the additive agent according to the invention provides a more pronounced improvement of mechanical strength of the carbon fiber composite material than the comparative additive agent 2-(dimethylamino)-ethyl methacrylate.

## Claims

1. A composition comprising carbon fibers and an additive agent having a molecular weight of at least 200 g/mol and comprising at least one functional group (A) which is an ethylenically unsaturated polymerizable group, and at least one functional group (B) comprising at least one group selected from secondary amine, tertiary amine, salt of secondary or tertiary amine, and quaternary ammonium, and wherein groups (A) and groups (B) are connected via covalent bonds, and wherein the covalent bonds include at least one ester group.

2. The composition according to claim 1, wherein the ethylenically unsaturated polymerizable group is selected from acrylic acid ester, methacrylic acid ester, maleic acid ester, fumaric acid ester, itaconic acid ester, vinyl ester, vinyl ether, vinyl aromatic group, allyl ester, allyl ether, and combinations thereof.

3. The composition according to claim 1 or 2, wherein the additive agent has a molecular weight of at least 300 g/mol.

4. The composition according to any one of the preceding claims, wherein the additive agent has at least two functional groups (B1) and (B2), wherein (B1) comprises at least one secondary or tertiary amine group and (B2) comprises at least one group selected from tertiary amine and hydroxyl.

5. The composition according to any one of the preceding claims, wherein the additive agent is represent by the formula (I)
A-R¹-O-(C=O)-CR²R³-CR⁴R⁵-NR⁶R⁷ (I)
wherein
A represents an ethylenically unsaturated polymerizable group,
R¹ represents an organic linking group,
R², R³, R⁴, and R⁵ independent of each other represent hydrogen or an alkyl group having 1 to 6 carbon atoms, with the proviso that at least one of R², R³, R⁴, and R⁵ is hydrogen,
R⁶ and R⁷ independently of each other represent hydrogen or an organic group.

6. The composition according to any one of the preceding claims, wherein the additive agent is represented by at least one of formulae (II) and (III) 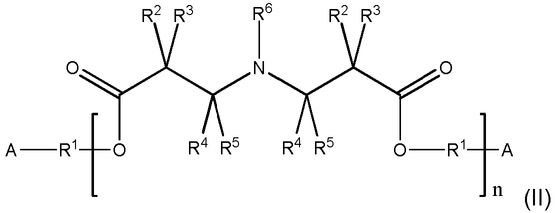 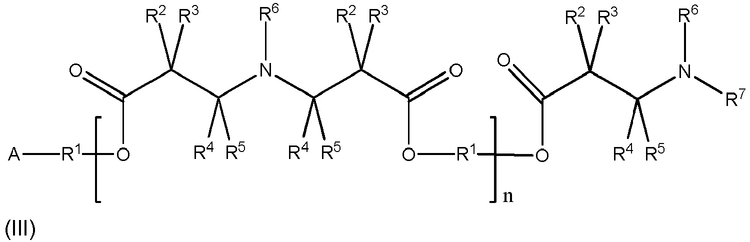 wherein the groups A and R¹ to R⁷ are defined as for formula (I), and n represents an integer from 1 to 15.

7. The composition according to any one of the preceding claims, wherein the additive agent comprises a segment selected from polyalkylene oxide segment, polyester segment and combinations thereof, which is located between at least one functional group (A) and at least one functional group (B).

8. The composition according to claim 7, wherein the polyalkylene oxide segment is based on polymerized units selected from ethylene oxide, propylene oxide, and combinations thereof.

9. The composition according to any one of the preceding claims, wherein the composition further comprises a curable resin or prepolymer component having at least one ethylenically unsaturated polymerizable group.

10. The composition according to any one of the preceding claims, wherein the carbon fibers are present as filament fibers, staple fibers or chopped fibers.

11. The composition according to claim 10, wherein the carbon fibers are present as filament fibers in the form of a woven- or non-woven fabric or a roving.

12. The composition according to any one of the preceding claims, wherein the additive agent is present in an amount of 0.1 to 15.0 % by weight, calculated on the weight of the carbon fibers.

13. A process of manufacturing a carbon fiber composite material, comprising the steps of
i) providing a composition comprising
a) carbon fibers,
b) an additive agent having a molecular weight of at least 200 g/mol and comprising at least one functional group (A) which is an ethylenically unsaturated polymerizable group, and at least one functional group (B) comprising at least one group selected from secondary amine, tertiary amine, salt of secondary or tertiary amine, and quaternary ammonium, and wherein groups (A) and groups (B) are connected via covalent bonds, and wherein the covalent bonds include at least one ester group, and
c) a curable resin or prepolymer component having ethylenically unsaturated polymerizable groups,
ii) curing the composition by radical polymerization to produce a carbon fiber composite material.

14. The process according to claim 13, wherein the additive agent is added to the carbon fibers prior to including the curable resin or prepolymer component to the composition.

15. The process according to claim 13, wherein the additive agent is added to the carbon fibers together with or after the curable resin or prepolymer component.

16. A carbon fiber composite material obtainable by the process of any one of claims 13 to 15.

17. Use of an additive agent having a molecular weight of at least 200 g/mol and comprising at least one functional group (A) which is an ethylenically unsaturated polymerizable group, and at least one functional group (B) comprising at least one group selected from secondary amine, tertiary amine, salt of secondary or tertiary amine, and quaternary ammonium secondary or tertiary amine group, and wherein groups (A) and groups (B) are connected via covalent bonds, and wherein the covalent bonds include at least one ester group, for improving the mechanical properties of a carbon fiber composite material.

## Patentansprüche

1. Zusammensetzung, die Kohlefasern und ein Additivreagens umfasst, das ein Molekulargewicht von mindestens 200 g/mol aufweist und mindestens eine funktionelle Gruppe (A), bei der es sich um eine ethylenisch ungesättigte polymerisierbare Gruppe handelt, und mindestens eine funktionelle Gruppe (B) umfasst, die mindestens eine aus sekundärem Amin, tertiärem Amin, Salz eines sekundären oder tertiären Amins und quartärem Ammonium ausgewählte Gruppe umfasst, und wobei Gruppen (A) und Gruppen (B) über kovalente Bindungen verbunden sind und wobei die kovalenten Bindungen mindestens eine Estergruppe enthalten.

2. Zusammensetzung nach Anspruch 1, wobei die ethylenisch ungesättigte polymerisierbare Gruppe aus Acrylsäureester, Methacrylsäureester, Maleinsäureester, Fumarsäureester, Itaconsäureester, Vinylester, Vinylether, einer vinylaromatischen Gruppe, Allylester, Allylether und Kombination davon ausgewählt ist.

3. Zusammensetzung nach Anspruch 1 oder 2, wobei das Additivreagens ein Molekulargewicht von mindestens 300 g/mol aufweist.

4. Zusammensetzung nach einem der vorhergehenden Ansprüche, wobei das Additivreagens mindestens zwei funktionelle Gruppen (B1) und (B2) aufweist, wobei (B1) mindestens eine sekundäre oder tertiäre Amingruppe umfasst und (B2) mindestens eine aus tertiärem Amin und Hydroxyl ausgewählte Gruppe umfasst.

5. Zusammensetzung nach einem der vorhergehenden Ansprüche, wobei das Additivreagens durch die Formel (I) wiedergegeben wird
A-R¹-O-(C=O)-CR²R³-CR⁴R⁵-NR⁶R⁷ (I),
wobei
A für eine ethylenisch ungesättigte polymerisierbare Gruppe steht,
R¹ für eine organische Verknüpfungsgruppe steht,
R², R³, R⁴ und R⁵ unabhängig voneinander für Wasserstoff oder eine Alkylgruppe mit 1 bis 6 Kohlenstoffatomen stehen, mit der Maßgabe, dass R², R³, R⁴ und/oder R⁵ Wasserstoff sind,
R⁶ und R⁷ unabhängig voneinander für Wasserstoff oder eine organische Gruppe stehen.

6. Zusammensetzung nach einem der vorhergehenden Ansprüche, wobei das Additivreagens durch Formel (II) und/oder Formel (III) wiedergegeben wird 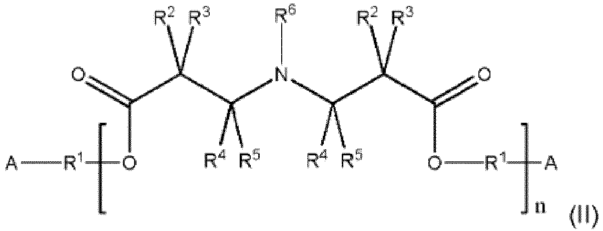 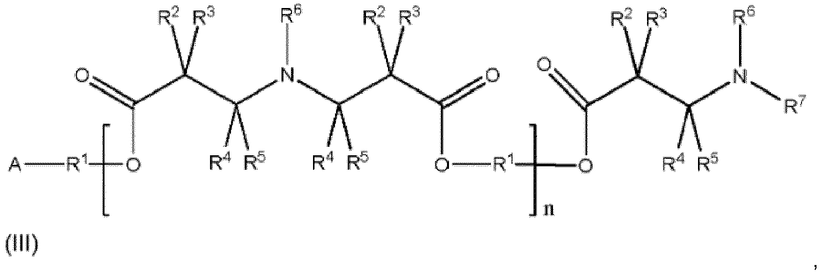 wobei die Gruppen A und R¹ bis R⁷ wie für Formel (I) definiert sind und n für eine ganze Zahl von 1 bis 15 steht.

7. Zusammensetzung nach einem der vorhergehenden Ansprüche, wobei das Additivreagens ein aus Polyalkylenoxid-Segment, Polyester-Segment und Kombinationen davon ausgewähltes Segment umfasst, das sich zwischen mindestens einer funktionellen Gruppe (A) und mindestens einer funktionellen Gruppe (B) befindet.

8. Zusammensetzung nach Anspruch 7, wobei das Polyalkylenoxid-Segment auf polymerisierten Einheiten, die aus Ethylenoxid, Propylenoxid und Kombinationen davon ausgewählt sind, basiert.

9. Zusammensetzung nach einem der vorhergehenden Ansprüche, wobei die Zusammensetzung ferner eine härtbare Harz- oder Präpolymerkomponente mit mindestens einer ethylenisch ungesättigten polymerisierbaren Gruppe umfasst.

10. Zusammensetzung nach einem der vorhergehenden Ansprüche, wobei die Kohlefasern als Endlosfasern, Stapelfasern oder geschnittene Fasern vorliegen.

11. Zusammensetzung nach Anspruch 10, wobei die Kohlefasern als Endlosfasern in Form von Gewebe oder Vlies oder als Roving vorliegt.

12. Zusammensetzung nach einem der vorhergehenden Ansprüche, wobei das Additivreagens in einer Menge von 0,1 bis 15 Gewichts-%, berechnet bezogen auf das Gewicht der Kohlefasern, vorliegt.

13. Verfahren zur Herstellung eines Kohlefaser-Verbundwerkstoffs, das die folgenden Schritte umfasst:
i) Bereitstellen einer Zusammensetzung, umfassend
a) Kohlefasern,
b) ein Additivreagens, das ein Molekulargewicht von mindestens 200 g/mol aufweist und mindestens eine funktionelle Gruppe (A), bei der es sich um eine ethylenisch ungesättigte polymerisierbare Gruppe handelt, und mindestens eine funktionelle Gruppe (B) umfasst, die mindestens eine aus sekundärem Amin, tertiärem Amin, Salz eines sekundären oder tertiären Amins und quartärem Ammonium ausgewählte Gruppe umfasst, und wobei Gruppen (A) und Gruppen (B) über kovalente Bindungen verbunden sind und wobei die kovalenten Bindungen mindestens eine Estergruppe enthalten, und
c) eine härtbare Harz- oder Präpolymerkomponente mit ethylenisch ungesättigten polymerisierbaren Gruppen,
ii) Härten der Zusammensetzung durch radikalische Polymerisation zur Herstellung eines Kohlefaser-Verbundwerkstoffs.

14. Verfahren nach Anspruch 13, wobei das Additivreagens den Kohlefasern zugegeben wird, bevor die härtbare Harz- oder Präpolymerkomponente in die Zusammensetzung eingearbeitet wird.

15. Verfahren nach Anspruch 13, wobei das Additivreagens den Kohlefasern zusammen mit oder nach der Zugabe der härtbaren Harz- oder Präpolymerkomponente zugegeben wird.

16. Kohlefaser-Verbundwerkstoff, erhältlich durch ein Verfahren nach einem der Ansprüche 13 bis 15.

17. Verwendung eines Additivreagens, das ein Molekulargewicht von mindestens 200 g/mol aufweist und mindestens eine funktionelle Gruppe (A), bei der es sich um eine ethylenisch ungesättigte polymerisierbare Gruppe handelt, und mindestens eine funktionelle Gruppe (B) umfasst, die mindestens eine aus sekundärem Amin, tertiärem Amin, Salz eines sekundären oder tertiären Amins und quartärem Ammonium ausgewählte Gruppe umfasst, und wobei Gruppen (A) und Gruppen (B) über kovalente Bindungen verbunden sind und wobei die kovalenten Bindungen mindestens eine Estergruppe enthalten, zur Verbesserung der mechanischen Eigenschaften eines Kohlefaser-Verbundwerkstoffs.

## Revendications

1. Composition comprenant des fibres de carbone et un agent additif possédant un poids moléculaire d'au moins 200 g/mole et comprenant au moins un groupe fonctionnel (A) qui est un groupe polymérisable éthyléniquement insaturé, et au moins un groupe fonctionnel (B) comprenant au moins un groupe choisi parmi une amine secondaire, une amine tertiaire, un sel d'amine secondaire ou tertiaire, et un ammonium quaternaire, et les groupes (A) et les groupes (B) étant reliés via des liaisons covalentes, et les liaisons covalentes comprenant au moins un groupe ester.

2. Composition selon la revendication 1, le groupe polymérisable éthyléniquement insaturé étant choisi parmi un ester d'acide acrylique, un ester d'acide méthacrylique, un ester d'acide maléique, un ester d'acide fumarique, un ester d'acide itaconique, un ester de vinyle, un éther de vinyle, un groupe aromatique vinylique, un ester d'allyle, un éther d'allyle, et des combinaisons correspondantes.

3. Composition selon la revendication 1 ou 2, l'agent additif possédant un poids moléculaire d'au moins 300 g/mole.

4. Composition selon l'une quelconque des revendications précédentes, l'agent additif possédant au moins deux groupes fonctionnels (B1) et (B2), (B1) comprenant au moins un groupe amine secondaire ou tertiaire et (B2) comprenant au moins un groupe choisi parmi une amine tertiaire et hydroxyle.

5. Composition selon l'une quelconque des revendications précédentes, l'agent additif étant représenté par la formule (I)
A-R¹-O-(C=O)-CR²R³-CR⁴R⁵-NR⁶R⁷ (I)
A représentant un groupe polymérisable éthyléniquement insaturé,
R¹ représentant un groupe lieur organique,
R², R³, R⁴, et R⁵ représentant indépendamment les uns des autres hydrogène ou un groupe alkyle possédant 1 à 6 atomes de carbone, à la condition qu'au moins l'un parmi R², R³, R⁴, et R⁵ soit hydrogène,
R⁶ et R⁷ représentant indépendamment l'un de l'autre hydrogène ou un groupe organique.

6. Composition selon l'une quelconque des revendications précédentes, l'agent additif étant représenté par au moins l'une des formules (II) et (III) 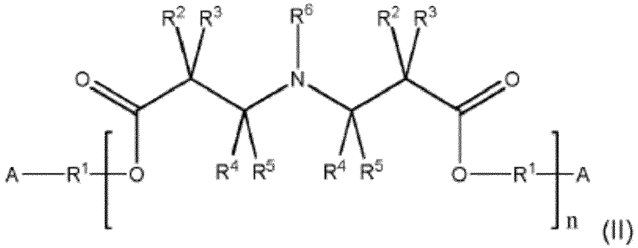 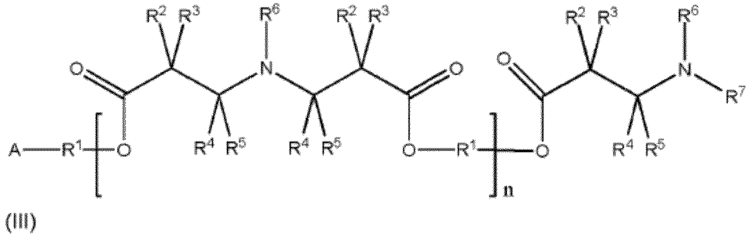 les groupes A et R¹ à R⁷ étant définis comme pour la formule (I), et n représentant un entier de 1 à 15.

7. Composition selon l'une quelconque des revendications précédentes, l'agent additif comprenant un segment choisi parmi un segment de type poly(oxyde d'alkylène), un segment de type polyester et des combinaisons correspondantes, qui est situé entre au moins un groupe fonctionnel (A) et au moins un groupe fonctionnel (B).

8. Composition selon la revendication 7, le segment de type poly(oxyde d'alkylène) étant basé sur des motifs polymérisés choisis parmi l'oxyde d'éthylène, l'oxyde de propylène, et des combinaisons correspondantes.

9. Composition selon l'une quelconque des revendications précédentes, la composition comprenant en outre un composant de type résine ou prépolymère durcissable possédant au moins un groupe polymérisable éthyléniquement insaturé.

10. Composition selon l'une quelconque des revendications précédentes, les fibres de carbone étant présentes en tant que fibres filamenteuses, fibres discontinues ou fibres coupées.

11. Composition selon la revendication 10, les fibres de carbone étant présentes en tant que fibres filamenteuses sous la forme d'un tissu tissé ou non tissé ou d'une mèche.

12. Composition selon l'une quelconque des revendications précédentes, l'agent additif étant présent en une quantité de 0,1 à 15,0 % en poids, calculée sur le poids des fibres de carbone.

13. Procédé de fabrication d'un matériau composite de fibres de carbone, comprenant les étapes de
i) mise à disposition d'une composition comprenant
a) des fibres de carbone,
b) un agent additif possédant un poids moléculaire d'au moins 200 g/mole et comprenant au moins un groupe fonctionnel (A) qui est un groupe polymérisable éthyléniquement insaturé, et au moins un groupe fonctionnel (B) comprenant au moins un groupe choisi parmi une amine secondaire, une amine tertiaire, un sel d'amine secondaire ou tertiaire, et un ammonium quaternaire, et les groupes (A) et les groupes (B) étant reliés via des liaisons covalentes, et les liaisons covalentes comprenant au moins un groupe ester, et
c) un composant de type résine ou prépolymère durcissable possédant des groupes polymérisables éthyléniquement insaturés,
ii) durcissement de la composition par polymérisation radicalaire pour produire un matériau composite de fibres de carbone.

14. Procédé selon la revendication 13, l'agent additif étant ajouté aux fibres de carbone avant d'inclure le composant de type résine ou prépolymère durcissable dans la composition.

15. Procédé selon la revendication 13, l'agent additif étant ajouté aux fibres de carbone ensemble avec ou après le composant de type résine ou prépolymère durcissable.

16. Matériau composite de fibres de carbone pouvant être obtenu par le procédé selon l'une quelconque des revendications 13 à 15.

17. Utilisation d'un agent additif possédant un poids moléculaire d'au moins 200 g/mole et comprenant au moins un groupe fonctionnel (A) qui est un groupe polymérisable éthyléniquement insaturé, et au moins un groupe fonctionnel (B) comprenant au moins un groupe choisi parmi une amine secondaire, une amine tertiaire, un sel d'amine secondaire ou tertiaire, et un groupe amine secondaire ou tertiaire d'ammonium quaternaire, et les groupes (A) et les groupes (B) étant reliés via des liaisons covalentes, et les liaisons covalentes comprenant au moins un groupe ester, pour l'amélioration des propriétés mécaniques d'un matériau composite de fibres de carbone.
